(19) Europäisches Patentamt
European Patent Office
Office européen des brevets

(11) **EP 1 929 279 B1**

(12) **EUROPÄISCHE PATENTSCHRIFT**

(45) Veröffentlichungstag und Bekanntmachung des Hinweises auf die Patenterteilung:
**02.12.2009 Patentblatt 2009/49**

(21) Anmeldenummer: **06792002.5**

(22) Anmeldetag: **12.09.2006**

(51) Int Cl.:
***G01N 21/41*** *(2006.01)*

(86) Internationale Anmeldenummer:
**PCT/EP2006/008880**

(87) Internationale Veröffentlichungsnummer:
**WO 2007/036298 (05.04.2007 Gazette 2007/14)**

(54) **VORRICHTUNG UND VERFAHREN ZUR BESTIMMUNG DES BRECHUNGSINDEX EINES FLUIDS**

APPARATUS AND METHOD FOR DETERMINING THE REFRACTIVE INDEX OF A FLUID

PROCEDE ET DISPOSITIF POUR DETERMINER L'INDICE DE REFRACTION D'UN FLUIDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.09.2005 DE 102005045538**

(43) Veröffentlichungstag der Anmeldung:
**11.06.2008 Patentblatt 2008/24**

(73) Patentinhaber: **M.U.T. Aviation-Technology GmbH**
**22559 Hamburg (DE)**

(72) Erfinder:
• **CIERULLIES, Sven**
**22763 Hamburg (DE)**
• **BEBERMEIER, Ingo**
**22880 Wedel (DE)**

(74) Vertreter: **UEXKÜLL & STOLBERG**
**Patentanwälte**
**Beselerstrasse 4**
**22607 Hamburg (DE)**

(56) Entgegenhaltungen:
**EP-A2- 0 116 746     DE-A1- 10 350 747**

**Beschreibung**

Die vorliegende Erfindung betrifft eine Vorrichtung und ein Verfahren zur Bestimmung des Brechungsindex eines Fluids.

In zahlreichen technischen Anwendungen ist es erforderlich, den Brechungsindex von Fluiden zu messen. So wird etwa in den Bereichen der Prozeßüberwachung und Qualitätskontrolle regelmäßig ausgenutzt, daß der Brechungsindex eine Funktion der Dichte oder Zusammensetzung eines Fluids ist. Auf diesem Prinzip basieren z.B. Meßverfahren zur Bestimmung der Reife eines Weines, der Frostschutzeigenschaften von Kühlflüssigkeit und Gefrierschutzmitteln oder der Säuredichte des Elektrolyten einer Batterie. Ferner ist es bekannt, die Konzentrationsabhängigkeit des Brechungsindex von Lösungen und Flüssigkeitsgemischen zur Bestimmung der Konzentration von Alkohol in alkoholischen Getränken oder zur Bestimmung der Zusammensetzung von Zuckersäften, Limonade, Fruchtsirupen, Milchfett, petrochemischen Produkten usw. einzusetzen. Da der Brechungsindex eines Stoffes zumeist empfindlicher auf eventuell vorhandene gelöste Kontaminationen reagiert als die Dichte, kann der Brechungsindex ferner sowohl bei der Identifizierung eines flüssigen Produktes als auch bei dessen Reinheitskontrolle von Bedeutung sein. Die Messung des Brechungsindex wird daher auch im Rahmen der Reinheitsprüfung von Glycerin, Kohlenwasserstoffen, Mineralölen, ätherischen Ölen, Wachsen, Fetten usw. verwendet.

Aufgrund der großen Bedeutung derartiger Meßverfahren sind im Stand der Technik eine Vielzahl unterschiedlicher Vorrichtungen zur Bestimmung des Brechungsindex von optischen Medien bekannt. Diese sogenannten Refraktometer basieren zumeist auf der Beobachtung des Verhaltens eines Lichtstrahls an der Grenzfläche zwischen einem Medium mit bekanntem Brechungsindex und dem zu vermessenden Medium. Dabei kann der Brechungsindex prinzipiell mit Hilfe des snelliusschen Brechungsgesetzes nach einer Messung des Winkels des einfallenden Lichtstrahls und des gebrochenen Lichtstrahls berechnet werden. Dies ist jedoch häufig aufgrund von Schwierigkeiten bei der Beobachtung des gebrochenen Lichtstrahls unpraktikabel. Eine große Anzahl von Refraktometern beruht daher auf der Beobachtung des an der Grenzfläche reflektierten Strahls.

So wird etwa mit dem bekannten Abbe-Refraktometer und vergleichbaren Geräten der Grenzwinkel der Totalreflexion bestimmt, der von den Brechungsindizes der beiden die Grenzfläche definierenden optischen Medien abhängt. Allerdings ist mit solchen Refraktometern der Nachteil verbunden, daß die Lichtquelle und ein Einzeldetektor mechanisch bewegt werden müssen oder eine bewegliche Lichtquelle zusammen mit einem Mehrfachdetektor verwendet werden muß, um den Winkel zu ermitteln, der den Extremwert der reflektierten Intensität ergibt. Refraktometer mit beweglicher Lichtquelle und/oder beweglichem Detektor sind nicht nur kompliziert aufgebaut, sondern eignen sich auch nur eingeschränkt zu einer schnellen und automatischen Messung, etwa im Rahmen der Prozeßüberwachung. Sollen solche Anordnungen für automatische Messungen verwendet werden, sind darüber hinaus elektrische Bauteile in der Nähe der Grenzfläche erforderlich, so daß dieses Refraktometerprinzip ohne kostenintensive Zusatzmaßnahmen, wie etwa eine eigensichere Ausführung, nicht in explosionsgefährdeten Bereichen eingesetzt werden kann. Aus demselben Grunde ist ein Einsatz in Umgebungen mit starker elektromagnetischer Strahlung oder extremen Temperaturen nicht ohne nachteilige Zusatzmaßnahmen möglich. Schließlich ist auch für viele Anwendungen unter Berücksichtigung von Temperaturschwankungen der erzielbare Meßbereich zu klein. Dieselben Schwierigkeiten bestehen bei dem Refraktometer, das in der US 5, 572, 314 beschrieben ist. Es setzt parallel zu der durch den einfallenden Lichtstrahl und den reflektierten Lichtstrahl definierten Einfallsebene polarisiertes Licht ein, um den Brewster-Winkel zu bestimmen, also den Winkel, unter dem die reflektierte Intensität minimal ist.

In DE 198 05 853 A1 ist ein Refraktometer offenbart, bei dem Lichtquelle und Detektor unter einem festen Winkel angeordnet sind. Bei diesem Refraktometer wird die Abhängigkeit der Reflexion an der Grenzfläche von der Polarisationsrichtung ausgenutzt, um den Brechungsindex zu bestimmen. Dazu wird linear polarisiertes Licht in die Grenzfläche eingebracht, die Polarisationsrichtung während der Messung um 360° um die Strahlachse gedreht und die reflektierte Intensität kontinuierlich als Funktion des Winkels der Polarisationsrichtung gemessen. Anschließend werden aus dem Intensitätsverlauf die Extremwerte der Intensität bestimmt, die den Polarisationsrichtungen senkrecht und parallel zur Einfallsebene entsprechen. Gemäß den Fresnelschen Gleichungen ist das Reflexionsvermögen $R_p$ für parallel zur Einfallsebene polarisiertes Licht

$$R_p = \frac{\tan^2(\theta_i - \theta_t)}{\tan^2(\theta_i + \theta_t)}.$$

und das Reflexionsvermögen $R_s$ für senkrecht zur Einfallsebene polarisiertes Licht

$$R_s = \frac{\sin^2(\theta_i - \theta_t)}{\sin^2(\theta_i + \theta_t)},$$

wobei $\theta_i$ der Einfallswinkel und $\theta_t$ der Winkel des gebrochenen Strahls ist. Letzterer steht über die folgende, dem snelliusschen Brechungsgesetz entsprechende Beziehung mit dem bekannten Brechungsindex $n_{bek}$ und dem zu bestimmenden Brechungsindex $n_{Fluid}$ des Fluids in Zusammenhang:

$$\theta_t = \arcsin\left[\frac{n_{bek}}{n_{Fluid}}\sin(\theta_i)\right].$$

Mit Hilfe dieses Gleichungssystems kann mit Kenntnis des Einfallswinkels der Brechungsindex des Fluids berechnet werden. Ferner ist die Kenntnis und geeignete Einstellung des Einfallswinkels zur Erreichung einer optimalen Leistung des Refraktometers von Bedeutung.

Bei dem Refraktometer der DE 198 05 853 A1 kann als Lichtquelle eine auf einem Elektromotor montierte, linear polarisiertes Licht aussendende Laserdiode oder eine unpolarisiertes Licht abstrahlende Lichtquelle zusammen mit einem sich drehenden Polarisator oder einer wechselspannungsbetriebenen Kerr-Zelle eingesetzt werden. Bei der Verwendung unpolarisierten Lichtes kann der sich drehende Polarisator oder die Kerr-Zelle alternativ auch nach der Reflexion an der Grenzfläche in dem Strahlengang angeordnet sein. In jedem Fall ist bei diesem Aufbau wieder nachteilig, daß elektrische Bauteile in der Nähe der Grenzfläche erforderlich sind und daher der Einsatz in explosionsgefährdeten Bereichen oder in Umgebungen mit starker elektromagnetischer Strahlung oder extremen Temperaturen nicht ohne weiteres möglich ist. Die notwendigen elektrischen Bauteile lassen sich auch nicht durch kostengünstige, einfache Lichtleiter, sondern nur durch spezielle teure, polarisationserhaltende Lichtleiter von dem Meßplatz trennen, da einfache Lichtleiter die Polarisationsrichtung ändern würden. Beispielsweise muß bei der Verwendung der sich drehenden Laserdiode die Polarisation auf der gesamten Strecke zwischen Laserdiode und Grenzfläche aufrechterhalten werden. Somit ist der Aufbau kompliziert und unflexibel. So bedingen eine sich drehende Lichtquelle und ein sich drehender Polarisator zwingend bewegliche mechanische Bauteile. Außerdem ist auch hier die Messung relativ langsam, da die Polarisationsrichtung stets den gesamten Winkelbereich durchfahren muß.

Zur Messung des Brechungsindexes von Flüssigkeiten mittels Polarisationsanalyse siehe auch EP 116 746.

Aufgrund der genannten Nachteile ist der Einsatz bekannter Refraktometer zur Messung der Dichte von Kraftstoffen in Treibstofftanks von Fahrzeugen, Schiffen oder Luftfahrzeugen und insbesondere zur Messung der Dichte von Kerosin in Kerosintanks von Flugzeugen und anderen Luftfahrzeugen mit erheblichen Schwierigkeiten und Beschränkungen verbunden. Gerade in diesen Umgebungen, in denen ständig explosionsfähige Gasgemische vorhanden sind und in denen an technische Einrichtungen aufgrund hoher Belastungen hohe Anforderungen gestellt werden, ist die Vermeidung der Zufuhr elektrischer Energie, die Verwendbarkeit in einem weiten Temperaturbereich von typischerweise -55 °C bis +90 °C, die Sicherheit gegenüber der Einstrahlung elektromagnetischer Energie, eine hohe mechanische Stabilität (z.B. gegenüber starken Erschütterungen und Vibrationen), eine große Flexibilität beim Einbau und eine möglichst große Gewichts- und Platzersparnis von entscheidender Bedeutung. Nach Möglichkeit sollte ein Meßgerät zum Einsatz in einem Flugzeug eine Meßgenauigkeit von bis zu 1 Promille aufweisen.

Aus der DE 198 56 591 A1 ist eine Vorrichtung zur spektroskopischen Analyse eines fluiden Mediums mittels abgeschwächter Reflexion bekannt, die Mittel zum Einstrahlen eines ersten und eines zweiten Lichtstrahls auf eine Grenzfläche des zu analysierenden Mediums und Mittel zum Messen der Intensitäten der beiden an der Grenzfläche reflektierten Lichtstrahlen aufweist. Im Strahlengang des ersten Lichtstrahls ist vor der Grenzfläche ein Polarisator für senkrecht polarisiertes Licht und/oder nach der Grenzfläche ein Analysator für senkrecht polarisiertes Licht angeordnet und im Strahlengang des zweiten Lichtstrahls ist vor der Grenzfläche ein Polarisator für parallel polarisiertes Licht und/oder nach der Grenzfläche ein Analysator für parallel polarisiertes Licht angeordnet. Alternativ kann statt mit zwei Lichtstrahlen mit nur einem Lichtstrahl gearbeitet werden, wobei dann zwischen zwei Messungen die Polarisatoren und Analysatoren ausgetauscht oder um 90° gedreht werden müssen. Die Vorrichtung weist somit unterschiedliche Strahlengänge mit mehreren Polarisatoren und/oder Analysatoren oder einen Strahlengang mit drehbaren oder mehreren austauschbaren Polarisatoren und/oder Analysatoren auf.

Es ist Aufgabe der vorliegenden Erfindung, eine Vorrichtung und ein Verfahren zur Bestimmung des Brechungsindex eines Fluids so auszugestalten, daß ein einfacher und flexibler Aufbau erreicht wird und daß die genannten Nachteile beseitigt werden.

Zur Lösung dieser Aufgabe dienen die Merkmale von Patentanspruch 1 und von Patentanspruch 10. Vorteilhafte Ausführungsformen der Vorrichtung und des Verfahrens sind Gegenstand der jeweiligen zugehörigen Unteransprüche.

Nach der vorliegenden Erfindung ist vorgesehen, daß eine Vorrichtung zur Bestimmung des Brechungsindex eines Fluids einen lichtdurchlässigen Körper mit bekanntem Brechungsindex und mit einer Außenfläche aufweist, die so mit einem Fluid in Berührung gebracht werden kann, daß eine Grenzfläche zwischen dem lichtdurchlässigen Körper und dem Fluid gebildet wird. Die Vorrichtung weist ferner eine lichtemittierende Einrichtung zur Erzeugung eines Lichtstrahls auf, die so angeordnet ist, daß der Lichtstrahl entlang eines definierten Lichtweges den lichtdurchlässigen Körper durchläuft und unter einem vorbestimmten (jedoch gegebenenfalls zur Einstellung des Meßbereichs justierbaren bzw. einstellbaren) Winkel auf die Grenzfläche zwischen dem lichtdurchlässigen Körper und dem Fluid auftrifft. Demnach tritt der Lichtstrahl, der in Bezug auf die Grenzfläche während einer Messung eine konstante Orientierung aufweist, durch eine Eintrittsfläche des lichtdurchlässigen Körpers in diesen ein, wird an der Grenzfläche teilweise reflektiert und tritt durch eine Austrittsfläche wieder aus dem lichtdurchlässigen Körper aus. Eine Detektoranordnung ist in dem Lichtweg des reflektierten Lichtstrahls vorgesehen, um seine Intensität zu messen.

Erfindungsgemäß ist die lichtemittierende Einrichtung so gewählt, daß sie zumindest Licht mit einer ersten vorbestimmten Wellenlänge und einer zweiten vorbestimmten Wellenlänge erzeugen kann. Das bedeutet, daß in dem erzeugten Lichtstrahl Licht beider Wellenlängen enthalten ist oder daß in dem Lichtstrahl wahlweise umschaltbar Licht der ersten Wellenlänge und nicht Licht der zweiten Wellenlänge oder Licht der zweiten Wellenlänge und nicht Licht der ersten Wellenlänge enthalten ist. Die Detektoranordnung ist in der Weise ausgestaltet, daß sie ein erstes Signal erzeugt, das für die Intensität des reflektierten Lichtes bei der ersten Wellenlänge charakteristisch ist, und ein zweites Signal erzeugt, das für die Intensität des reflektierten Lichtes bei der zweiten Wellenlänge charakteristisch ist.

In dem Strahlengang ist zwischen der lichtemittierenden Einrichtung und der Detektoranordnung ferner ein optisches Element angeordnet, das bei der ersten und der zweiten Wellenlänge unterschiedlich polarisierend wirkt. Durch diese Ausgestaltung kann der Brechungsindex in einfacher Weise gemessen werden, indem während einer Messung unterschiedlich polarisiertes Licht mit demselben Lichtweg auf die Grenzfläche gerichtet und an dieser reflektiert wird. Da das Reflexionsvermögen wie oben dargelegt von der Polarisationsrichtung abhängt und sich insbesondere für Polarisation senkrecht und parallel zur Einfallsebene unterscheidet, kann aus dem Verhältnis der durch das erste und das zweite Signal (zusammen mit den Werten der einfallenden Intensitäten) angegebenen Reflexionsgrade bei den beiden Wellenlängen der Brechungsindex des Fluids berechnet werden. Für den speziellen Fall, daß das optische Element Licht der ersten Wellenlänge senkrecht zu der Einfallsebene und das Licht der zweiten Wellenlänge parallel zu der Einfallsebene polarisiert, können unmittelbar die oben angegebenen Beziehungen verwendet werden. Dabei kann für die Bestimmung des Brechungsindex beispielsweise ein numerisches Verfahren angewendet werden. Die Berechnung ist aber auch möglich, wenn sich lediglich die Polarisationsgrade für die beiden Wellenlängen unterscheiden. Dabei kann jedoch ein sehr geringer Unterschied im Polarisationsgrad die Genauigkeit der Bestimmung des Brechungsindex stark verringern.

Es ist für den Fachmann ersichtlich, daß es in der Praxis unmöglich ist, die Intensität ideal monochromatisch bei einer bestimmten Wellenlänge zu messen.

Reale Detektoranordnungen messen stets die Intensität in einem mehr oder weniger schmalen Wellenlängenbereich, der die interessierende Wellenlänge enthält. So weisen sowohl monochromatische Lichtquellen als auch Filter stets eine gewisse spektrale Bandbreite auf. Somit ist im Rahmen der vorliegenden Anmeldung unter einem Signal, das für die Intensität bei einer bestimmten Wellenlänge charakteristisch ist, in allgemein üblicher Weise ein Signal zu verstehen, das für die Intensität in einem die bestimmte Wellenlänge enthaltenden Wellenlängenband charakteristisch ist, das beispielsweise eine Halbwertsbreite von 10 nm oder weniger hat. Die Breite dieses Wellenlängenbandes hat jedoch einen Einfluß auf die Meßgenauigkeit und muß insbesondere für die erste und die zweite Wellenlänge jeweils so gewählt werden, daß sich die Polarisation unterscheidet. Es ist auch möglich mit breiteren oder sogar sehr breiten Wellenlängenbändern zu arbeiten, wobei aber im allgemeinen die Meßgenauigkeit verringert wird. Ferner sollten die beiden Wellenlängen so dicht beieinander liegen, daß entweder der durch die Wellenlängenabhängigkeit der Brechungsindizes des Materials des lichtdurchlässigen Körpers und des Fluids verursachte Fehler bei der Bestimmung des Brechungsindex des Fluids vernachlässigt werden kann, oder daß der Einfluß dieser Wellenlängenabhängigkeit rechnerisch in geeigneter Weise berücksichtigt werden kann.

Die erfindungsgemäße Vorrichtung hat den Vorteil, daß elektrische oder bewegliche mechanische Bauteile in unmittelbarer Umgebung des lichtdurchlässigen Körpers nicht erforderlich sind. Das optische Element kann in vorteilhafter Weise statisch und passiv, d.h. ohne elektrische und bewegliche mechanische Teile, ausgeführt werden und somit auch bei einem Einsatz in explosionsgefährdeten Bereichen in unmittelbarer Nähe der Meßstelle angeordnet werden. Der Lichtweg bis zu dem optischen Element (wenn sich dieses vor der Grenzfläche befindet) oder ab dem optischen Element (wenn sich dieses hinter der Grenzfläche befindet) kann ohne weiteres durch einfache Lichtleiter geführt werden, wodurch eine hohe Flexibilität erreicht wird. Die Vorrichtung ist einfach aufgebaut, kann kostengünstig hergestellt werden und weist aufgrund des Fehlens beweglicher Teile eine hohe mechanische Stabilität auf, so daß ein Einsatz in einer technischen Umgebung mit hohen mechanischen Belastungen möglich ist. Die Vorrichtung kann auch ohne weiteres in Umgebungen mit starker elektromagnetischer Strahlung oder extremen Temperaturen eingesetzt werden. Zudem ist eine schnelle und automatische Messung möglich. Ein weiterer Vorteil besteht darin, daß aufgrund des für die erste und die zweite Wellenlänge identischen Lichtweges Dämpfungseinflüsse in dem Lichtweg, wie etwa durch Verschmutzungen, den lichtdurchlässigen Körper, das optische Element oder Faserkrümmungen, unerheblich sind, wenn sie keinen unterschiedlichen Einfluß auf die beiden Wellenlängen haben, und letztlich das Verhältnis der Reflexionsgrade entscheidend ist. Lediglich das Verhältnis der bei den beiden Wellenlängen von der lichtemittierenden Einrichtung abgestrahlten Intensitäten sowie der Unterschied der Schwächung der Intensität durch die polarisierende Wirkung des optischen Elements müssen bekannt sein und gegebenenfalls durch Referenzmessungen kalibriert werden.

Aufgrund dieser Eigenschaften kann die erfindungsgemäße Vorrichtung in vorteilhafter Weise zur Messung der Dichte von Kraftstoffen in Treibstofftanks von Fahrzeugen, Schiffen oder Luftfahrzeugen und insbesondere zur Messung der Dichte von Kerosin in Kerosintanks von Flugzeugen und anderen Luftfahrzeugen an oder in einem entsprechenden Tank angeordnet werden. In diesen Anwendungen ist die Kenntnis der Kraftstoffdichte, die annähernd proportional zu dem Brechungsindex ist, wichtig, weil sie zusammen mit dem Füllstand die effektive Kraftstoffmenge und somit die maximal mögliche verbleibende Betriebszeit bestimmt. Da keine elektrischen Komponenten in der Nähe der Meßstelle eingesetzt werden, stellen beispielsweise die explosiven Gasgemische, die großen Temperaturschwankungen und die starke elektromagnetische Einstrahlung im Bereich der typischerweise an exponierten Stellen, wie etwa den Flügeln, angeordneten Treibstofftanks von Flugzeugen kein Problem dar. Ferner ist die Vorrichtung genauer als etablierte (kapazitive) in diesen Anwendungen verwendete Verfahren, so daß zur Sicherheit betankte Übermengen minimiert oder sogar vermieden werden können. Schließlich kann durch die Vorrichtung eine Gewichts- und Platzersparnis erreicht werden, die zusammen mit einer hohen Flexibilität bei der Wahl des Einbauortes eine Reduzierung der Betriebskosten ermöglichen, und die Vorrichtung ist aufgrund fehlender beweglicher Teile unempfindlich gegenüber den in Flugzeugen auftretenden starken mechanischen Belastungen.

In einer bevorzugten Ausgestaltung enthält die Vorrichtung eine Auswerteeinheit, die angepaßt ist, um das von der Detektoranordnung erzeugte erste Signal und das von der Detektoranordnung erzeugte zweite Signal zu empfangen und aus den beiden Signalen ein für den Brechungsindex des Fluids charakteristisches Signal zu erzeugen und gegebenenfalls den Wert des Brechungsindex auszugeben. Ferner kann die Auswerteeinheit in vorteilhafter Weise vorgesehen sein, um aus dem für den Brechungsindex charakteristischen Signal ein für die Zusammensetzung bzw. die Konzentration einer bestimmten Komponente charakteristisches Signal und/oder ein für die Dichte des Fluids charakteristisches Signal zu erzeugen und gegebenenfalls entsprechende Werte auszugeben. Eine derartige Vorrichtung kann die gewünschten Meßwerte unmittelbar ermitteln und gegebenenfalls anzeigen, ohne daß eine manuelle Berechnung erforderlich ist.

In einer bevorzugten Ausgestaltung ist die lichtemittierende Einrichtung angepaßt, um Licht der ersten Wellenlänge und Licht der zweiten Wellenlänge zeitlich getrennt nacheinander abzustrahlen. Dazu kann die lichtemittierende Einrichtung beispielsweise zwei monochromatische Lichtquellen, zwischen denen umgeschaltet werden kann, oder eine breitbandige Lichtquelle mit einem umschaltbaren Filter enthalten. In diesem Zusammenhang ist wieder darauf hinzuweisen, daß ein solcher Lichtstrahl in der Praxis stets einen gewissen, die jeweilige Wellenlänge enthaltenden Wellenlängenbereich umfassen wird. Im Rahmen der vorliegenden Erfindung ist es nur von Bedeutung, daß das Reflexionsvermögen bei zwei bestimmten Wellenlängen ausreichend genau gemessen werden kann, um den Brechungsindex mit einer gewünschten Genauigkeit bestimmen zu können. Strahlt die lichtemittierende Einrichtung Licht der ersten und der zweiten Wellenlänge zeitlich getrennt voneinander ab, so weist die Detektoranordnung einen Detektor zur Ermittlung der Intensität des auftreffenden Lichtes auf, der während der Abstrahlung von Licht der ersten Wellenlänge das erste Signal und während der Abstrahlung von Licht der zweiten Wellenlänge das zweite Signal erzeugt.

In einer alternativen Ausführungsform ist die lichtemittierende Einrichtung angepaßt, um die erste und zweite Wellenlänge gleichzeitig abzustrahlen. Dabei kann die lichtemittierende Einrichtung einen Lichtstrahl erzeugen, der im wesentlichen nur Licht der ersten und der zweiten Wellenlänge enthält. Es ist jedoch bevorzugt, daß die lichtemittierende Einrichtung eine breitbandige Lichtquelle enthält, die Licht aus einem Wellenlängenbereich abstrahlt, der sowohl die erste Wellenlänge als auch die zweite Wellenlänge umfaßt. In jedem Fall ist es bei der Verwendung einer derartigen lichtemittierenden Einrichtung erforderlich, daß die Detektoranordnung die Intensität des reflektierten Lichtes bei den beiden Wellenlängen getrennt bestimmen kann.

Dazu kann die Detektoranordnung einen Detektor aufweisen, vor dem in dem Lichtweg ein Filter angeordnet ist, der wahlweise zwischen einem ersten Durchlaßbereich, der die erste Wellenlänge enthält und die zweite Wellenlänge nicht enthält, und einem zweiten Durchlaßbereich umgeschaltet werden kann, der die zweite Wellenlänge enthält und die erste Wellenlänge nicht enthält. Der Filter kann dabei an einer beliebigen Stelle zwischen der lichtemittierenden Einrichtung und der Detektoranordnung in dem Lichtweg positioniert werden. Während einer Messung wird der Filter umgeschaltet, und der Detektor erzeugt während des Betriebes mit dem ersten Durchlaßbereich das erste Signal und während des Betriebes mit dem zweiten Durchlaßbereich das zweite Signal. Wie oben bereits ausgeführt, muß die Breite der Durchlaßbereiche so gewählt werden, daß das Reflexionsvermögen bei den beiden Wellenlängen ausreichend genau gemessen werden kann, um den Brechungsindex mit einer gewünschten Genauigkeit bestimmen zu können. Eine weitere Möglichkeit besteht darin, die Detektoranordnung mit einem ersten Detektor mit einem ersten (z.B. dichroitischen) Filter, der einen die erste Wellenlänge enthaltenden und die zweite Wellenlänge nicht enthaltenden ersten Durchlaßbereich aufweist, und einen zweiten Detektor mit einem zweiten (z.B. dichroitischen) Filter auszustatten, der einen die zweite Wellenlänge enthaltenden und die erste Wellenlänge nicht enthaltenden zweiten Durchlaßbereich aufweist. Die Aufteilung des Lichtstrahls auf mehrere Detektoren kann beispielsweise durch einen dichroitischen Strahlteiler, eine Wellenplatte, einen symmetrischen Strahlteiler mit Filtern, ein Dispersions-Gitter oder -Prisma, einen Chopper mit Filter oder einen Faserschalter, -koppler oder -verteiler mit Filter realisiert werden. Während einer Messung erzeugt bei dem Auftreffen des reflektierten Lichtstrahls auf die Detektoranordnung der erste Detektor das erste Signal und der zweite Detektor das zweite Signal. Schließlich ist es auch möglich, daß die Detektoranordnung eine Einrichtung zur spektralen Analyse des auftreffenden Lichtes enthält, mit der die Intensität als Funktion der Wellenlänge bestimmt werden kann.

Es ist bevorzugt, wenn die Vorrichtung mindestens einen Lichtleiter enthält, der einen Teil des Lichtweges definiert und zwischen der lichtemittierenden Einrichtung und dem lichtdurchlässigen Körper und/oder zwischen dem lichtdurchlässigen Körper und der Detektoranordnung angeordnet ist. Auf diese Weise wird eine hohe Flexibilität erreicht, und die lichtemittierende Einrichtung und die Detektoranordnung können in einfacher Weise entfernt von dem lichtdurchlässigen Körper und damit von dem zu vermessenden Fluid angeordnet werden, so daß ein Einsatz der Vorrichtung in einem explosionsgefährdeten Bereich ohne weiteres möglich ist. Dabei kommt der besondere Vorteil zum Tragen, daß der Lichtweg für die beiden Wellenlängen identisch ist, so daß intensitätsverändernde Einflüsse nur dann berücksichtigt werden müssen, wenn sie sich auf die gewählten Wellenlängen unterschiedlich auswirken. Somit ist die Ansteuerung und Meßwertausgabe über wenige Lichtwellenleiter möglich. Es ist insbesondere von Vorteil, wenn sich zwischen dem lichtdurchlässigen Körper und dem optischen Element kein Lichtleiter in dem definierten Lichtweg befindet. In den übrigen Abschnitten des Lichtweges können in vorteilhafter Weise einfache Lichtleiter eingesetzt werden, da es hier nicht auf die Erhaltung eines bestimmten Polarisationszustandes ankommt. Dagegen müßten zwischen dem lichtdurchlässigen Körper und dem optischen Element spezielle polarisationserhaltende Lichtleiter verwendet werden. Es ist ferner in vorteilhafter Weise möglich, einen Lichtleiter vorzusehen, der so angeordnet ist, daß er sowohl einen Teil des Lichtweges zwischen der lichtemittierenden Einrichtung und dem lichtdurchlässigen Körper als auch einen Teil des Lichtweges zwischen dem lichtdurchlässigen Körper und der Detektoranordnung definiert. Dieser Lichtleiter wirkt dabei mit, Licht zu der Grenzfläche hin und von der Grenzfläche weg zu leiten. Auf diese Weise ist nur ein einziger Lichtleiter erforderlich, und es läßt sich eine besonders einfache und flexible Anordnung realisieren.

Das optische Element weist vorteilhaft einen Polarisationsstrahlteiler auf. Das optische Element kann aber durch jedes Element gebildet werden, das eine wellenlängenabhängige Polarisation aufweist und bevorzugt eine steile Kennlinie in dem Wellenlängenbereich zwischen den für die Berechnung verwendeten Wellenlängen aufweist.

In einer vorteilhaften Ausführungsform wird der lichtdurchlässige Körper durch ein Prisma gebildet. Dabei ist der definierte Lichtweg bevorzugt so gewählt, daß der Lichtstrahl sowohl zur Eintritts- als auch zur Austrittsfläche senkrecht ist. Auf diese Weise kann in besonders einfacher Weise gewährleistet werden, daß beide Wellenlängen auch innerhalb des lichtdurchlässigen Körpers einen identischen Lichtweg haben. Ein identischer Lichtweg innerhalb des lichtdurchlässigen Körpers ist jedoch nicht zwingend erforderlich. Es ist aber jedenfalls zu beachten, daß bei einem für die beiden Wellenlängen unterschiedlichen Lichtweg innerhalb des lichtdurchlässigen Körpers der Einfluß unterschiedlicher Winkel zur Grenzfläche berücksichtigt werden muß, und daß der Vorteil der für beide Wellenlängen identischen Dämpfung beseitigt werden kann. Alternativ zu einem Prisma kann der lichtdurchlässige Körper zum Beispiel auch durch eine Halbzylinderlinse gebildet werden.

Es ist bevorzugt, daß der lichtdurchlässige Körper aus Glas, einem kristallinen Material oder einem Polymer hergestellt ist, wobei das jeweilige Material bevorzugt keine wellenlängenabhängige Polarisation bewirkt. Es sollte so gewählt werden, daß sich sein Brechungsindex von dem Brechungsindex des zu vermessenden Fluids unterscheidet. Ein für die Verwendung bei der Messung von Kraftstoffen in Treibstofftanks und insbesondere von Kerosin in Kerosintanks von Flugzeugen besonders bevorzugtes Material ist Polymer und insbesondere Polyethersulfon.

In einer bevorzugten Ausführungsform ist die lichtemittierende Einrichtung in der Weise ausgestaltet, daß die erste Wellenlänge in einem Bereich von 525 bis 575 nm liegt und die zweite Wellenlänge in einem Bereich von 625 bis 675 nm liegt. Diese Bereiche liegen in der Nähe der He-D-Linie (587,6 nm), bei der historisch bedingt die Brechzahl definiert wird. Es können jedoch auch andere Bereiche verwendet werden, die aber für eine zweckmäßige Berechnung nicht zu weit voneinander beabstandet sein sollten.

In einer bevorzugten Ausführungsform ist die lichtemittierende Einrichtung in der Weise ausgestaltet, daß sie unpolarisiertes Licht abstrahlt, und das optische Element ist so gewählt, daß es für Licht der ersten Wellenlänge weniger stark linear polarisierend wirkt als für Licht der zweiten Wellenlänge. Den Idealfall stellt ein optisches Element dar, das für Licht der ersten Wellenlänge nicht polarisierend wirkt und Licht der zweiten Wellenlänge linear polarisiert. Es ist für den Fachmann ersichtlich, daß optische Elemente, die eine vollständige Polarisation bei einer Wellenlänge und gar keine Polarisation bei einer anderen Wellenlänge bewirken, schwer zu realisieren sind, und daß daher vollständige bzw. keine Polarisation als im wesentlichen vollständige Polarisation von z.B. über 95% bzw. im wesentlichen keine Polarisation von z.B. weniger als 5% zu verstehen ist. Solche optischen Elemente, die einen unterschiedlichen Polarisationsgrad oder allgemein unterschiedliche Polarisationsrichtungen bei den beiden Wellenlängen zeigen, lassen sich besonders einfach realisieren. Es hat sich gezeigt, daß der Brechungsindex auch ohne weiteres aus dem Verhältnis der Reflexionsgrade für in bestimmter Weise polarisiertes Licht zu unpolarisiertem Licht oder aus dem Verhältnis der Reflexionsgrade für Licht mit unterschiedlichem Polarisationsgrad berechnet werden kann. Dabei ist bei einem größeren Unterschied der Polarisationsgrade bei gleichem Aufwand eine größere Genauigkeit der Bestimmung des Brechungsindex möglich. Daher ist es von Vorteil, wenn die stärker polarisierte Wellenlänge einen Polarisationsgrad von mehr als 60%, bevorzugt mehr als 70%, noch mehr bevorzugt mehr als 80% und am meisten bevorzugt mehr als 90% aufweist, und die schwächer polarisierte Wellenlänge einen Polarisationsgrad von weniger als 40%, mehr bevorzugt weniger als 30%, noch mehr bevorzugt weniger als 20% und am meisten bevorzugt weniger als 10% aufweist. Die größte Genauigkeit ist mit dem oben angegebenen Idealfall zu erzielen. Darüber hinaus können in dieser Ausgestaltung einfache und kostengünstige Lichtquellen eingesetzt werden.

Es ist bevorzugt, daß die Vorrichtung einen Behälter zur Aufnahme des Fluids enthält, wobei in der Wandung des Behälters eine Öffnung ausgebildet ist, die durch die Außenfläche des lichtdurchlässigen Körpers, die die Grenzfläche bildet, fluiddicht abgeschlossen ist. Der Behälter ist bevorzugt der Treibstofftank eines Fahrzeugs und besonders bevorzugt der Kerosintank eines Flugzeugs.

In einer bevorzugten Ausführungsform ist die Vorrichtung als Tauchsonde ausgebildet. Sie weist dazu ein Gehäuse auf, bei dem zumindest ein Teil der Außenfläche des lichtdurchlässigen Körpers einen Teil der Außenwandung des Gehäuses bildet, bevorzugt indem das Gehäuse in seiner Wandung eine Öffnung hat und indem der lichtdurchlässige Körper so in dem Gehäuse angeordnet ist, daß sich seine Außenfläche oder ein Teil seiner Außenfläche in der Öffnung befindet und somit einen Teil der Außenwandung des Gehäuses bildet. Das Gehäuse und insbesondere die Verbindung zwischen dem Gehäuse und dem lichtdurchlässigen Körper ist in der Weise fluiddicht abgeschlossen, daß die Tauchsonde zur Messung des Brechungsindex eines Fluids in dieses eingetaucht werden kann, ohne daß das Fluid in das Gehäuse einbringt. In einer Ausgestaltung ist die lichtemittierende Einrichtung und/oder die Detektoranordnung außerhalb des Gehäuses angeordnet, wobei zur Lichtzuleitung und/oder Lichtableitung ein Lichtleiter in das Gehäuse hineingeführt ist.

In einer weiteren bevorzugten Ausführungsform ist die lichtemittierende Einrichtung so ausgestaltet, daß sie nicht nur Licht mit der ersten und zweiten vorbestimmten Wellenlänge, sondern auch Licht mit mindestens einer weiteren Wellenlänge erzeugen kann. Die Detektoranordnung erzeugt für eine oder mehrere weitere vorbestimmte Wellenlängen jeweils ein weiteres Signal, das für die Intensität des reflektierten Lichtes bei der jeweiligen Wellenlänge charakteristisch ist. Dies kann entsprechend der oben genannten Möglichkeiten erfolgen, indem die lichtemittierende Einrichtung alle vorbestimmten Wellenlängen gleichzeitig abstrahlt und die Detektoranordnung die einzelnen vorbestimmten Wellenlängen getrennt vermißt, oder indem die lichtemittierende Einrichtung Licht der verschiedenen vorbestimmten Wellenlängen zeitlich getrennt abstrahlt und die Detektoranordnung die entsprechenden Signale während der Abstrahlung von Licht der jeweiligen Wellenlänge erzeugt. Dabei sind auch Mischformen möglich, d.h. in voneinander getrennten Zeiträumen können einzelne Wellenlängen in verschiedenen Gruppen zusammen abgestrahlt werden. In jedem Fall ist das optische Element so gewählt, daß es bei der ersten vorbestimmten Wellenlänge, bei der zweiten vorbestimmten Wellenlänge und bei den weiteren vorbestimmten Wellenlängen unterschiedlich polarisierend wirkt. Die Vorrichtung enthält dann vorteilhaft eine Auswerteeinheit, die angepaßt ist, um das von der Detektoranordnung erzeugte erste Signal, das von der Detektoranordnung erzeugte zweite Signal und das eine oder die mehreren weiteren von der Detektoranordnung erzeugten Signale zu empfangen und aus diesen ein für den Brechungsindex des Fluids charakteristisches Signal zu erzeugen. Auf diese Weise läßt sich gegenüber der Verwendung von lediglich zwei Wellenlängen eine Steigerung der Genauigkeit der Bestimmung des Brechungsindex erreichen. Zum Beispiel können die weiteren vorbestimmten Wellenlängen zur Fehlerkorrektur verwendet werden.

In einer bevorzugten Ausgestaltung werden der lichtdurchlässige Körper und das optische Element durch dieselbe Komponente gebildet, d.h. der lichtdurchlässige Körper ist das optische Element. Eine derartige Anordnung enthält in vorteilhafter Weise weniger separate, relativ zueinander anzuordnende Komponenten, so daß ein einfacherer, robusterer und kostengünstigerer Aufbau erreicht wird.

Der Brechungsindex eines Fluids kann in vorteilhafter Weise mit einem Verfahren bestimmt werden, bei dem zunächst ein Fluid in der Weise angeordnet wird, daß eine Grenzfläche zwischen dem Fluid und einem lichtdurchlässigen Körper hergestellt wird. Dann wird ein Lichtstrahl erzeugt, der so entlang eines definierten Lichtweges verläuft, daß er den lichtdurchlässigen Körper durchquert und unter einem vorbestimmten Winkel auf die Grenzfläche auftrifft. Dabei wird während der Messung zumindest Licht mit einer ersten Wellenlänge und Licht mit einer zweiten Wellenlänge erzeugt, und das Licht erster Wellenlänge und das Licht zweiter Wellenlänge vor dem Auftreffen auf die Grenzfläche oder nach der Reflexion an der Grenzfläche unterschiedlich polarisiert. Nach dem unterschiedlichen Polarisieren werden die Intensitäten des an der Grenzfläche reflektierten Lichtes für die erste Wellenlänge und für die zweite Wellenlänge gemessen, und aus den gemessenen Intensitäten wird der Brechungsindex berechnet.

Ferner ist es auch in vorteilhafter Weise möglich, aus dem berechneten Brechungsindex die Zusammensetzung und/oder die Dichte des Fluids zu berechnen.

In einer bevorzugten Ausgestaltung wird der Lichtstrahl in der Weise erzeugt, daß er in einem ersten Zeitraum Licht der ersten Wellenlänge, aber kein Licht der zweiten Wellenlänge enthält, und daß er in einem zweiten Zeitraum Licht der zweiten Wellenlänge, aber kein Licht der ersten Wellenlänge enthält. Dann wird in dem ersten Zeitraum die Intensität des reflektierten Lichtes für die erste Wellenlänge und in dem zweiten Zeitraum die Intensität des reflektierten Lichtes für die zweite Wellenlänge gemessen.

In einer alternativen bevorzugten Ausgestaltung wird der Lichtstrahl in der Weise erzeugt, daß er gleichzeitig sowohl die erste als auch die zweite Wellenlänge enthält. Dabei ist es insbesondere bevorzugt, wenn der Lichtstrahl Licht aus einem Wellenlängenbereich enthält, der die erste und die zweite Wellenlänge umfaßt. Die Messung der Intensität des an der Grenzfläche reflektierten Lichtes für die erste Wellenlänge kann dann in der Weise erfolgen, daß in einem ersten Zeitraum ein Filter in dem Lichtweg angeordnet wird, der einen Durchlaßbereich hat, der die erste Wellenlänge enthält und die zweite Wellenlänge nicht enthält, und die Messung der Intensität des an der Grenzfläche reflektierten Lichtes für die zweite Wellenlänge kann in der Weise erfolgen, daß in einem zweiten Zeitraum ein Filter in dem Lichtweg angeordnet wird, der einen Durchlaßbereich hat, der die zweite Wellenlänge enthält und die erste Wellenlänge nicht enthält. Alternativ können die Intensitäten des an der Grenzfläche reflektierten Lichtes für die erste und die zweite Wellenlänge gleichzeitig gemessen werden. Dies ist dann von Vorteil, wenn die Messung möglichst schnell erfolgen soll.

Es ist bevorzugt, daß die erste Wellenlänge in einem Bereich von 525 bis 575 nm liegt und die zweite Wellenlänge in einem Bereich von 625 bis 675 nm liegt. Wie bereits erwähnt wurde, ist es vorteilhaft, wenn die verwendeten Wellenlängenbereiche in der Nähe der He-D-Linie liegen. Bei der möglichen Wahl weit entfernter Bereiche wird ein weiterer Rechenschritt benötigt, um die Brechzahl bei der He-D-Linie zu berechnen.

Ferner ist es bevorzugt, daß der erzeugte Lichtstrahl unpolarisiertes Licht enthält und daß das Licht der ersten Wellenlänge schwächer linear polarisiert wird als das Licht der zweiten Wellenlänge. Dabei stellt es wie oben bereits ausgeführt den Idealfall dar, wenn Licht der ersten Wellenlänge nicht polarisiert wird und Licht der zweiten Wellenlänge linear polarisiert wird. Es ist jedoch für den Fachmann ersichtlich, daß optische Elemente, die eine vollständige Polarisation bei einer Wellenlänge und gar keine Polarisation bei einer anderen Wellenlänge bewirken, nur schwer zu realisieren sind, und daß daher vollständige bzw. keine Polarisation als im wesentlichen vollständige Polarisation von z.B. über 95% bzw. im wesentlichen keine Polarisation von z.B. weniger als 5% zu verstehen ist. Allgemein ist die Berechnung des Brechungsindex bereits möglich, wenn sich die Polarisationsgrade für die beiden Wellenlängen unterscheiden, wobei bei einem größeren Unterschied der Polarisationsgrade bei gleichem Aufwand eine größere Genauigkeit der Bestimmung des Brechungsindex möglich ist. Daher ist es von Vorteil, wenn die stärker polarisierte Wellenlänge einen Polarisationsgrad von mehr als 60%, bevorzugt mehr als 70%, noch mehr bevorzugt mehr als 80% und am meisten bevorzugt mehr als 90% aufweist, und die schwächer polarisierte Wellenlänge einen Polarisationsgrad von weniger als 40%, mehr bevorzugt weniger als 30%, noch mehr bevorzugt weniger als 20% und am meisten bevorzugt weniger als 10% aufweist. Die größte Genauigkeit ist mit dem oben angegebenen Idealfall zu erreichen.

In einer bevorzugten Ausgestaltung wird Licht mit einer oder mehreren weiteren Wellenlängen erzeugt, das Licht erster Wellenlänge, das Licht zweiter Wellenlänge und das Licht der einen oder jeder der weiteren Wellenlängen vor dem Auftreffen auf die Grenzfläche oder nach der Reflexion an der Grenzfläche unterschiedlich polarisiert, die Intensität des an der Grenzfläche reflektierten Lichtes für die eine oder die mehreren weiteren Wellenlängen nach dem unterschiedlichen Polarisieren gemessen und der Brechungsindex aus den gemessenen Intensitäten für die erste Wellenlänge, die zweite Wellenlänge und die eine oder die mehreren weiteren Wellenlängen berechnet. Auf diese Weise kann die Genauigkeit der Bestimmung des Brechungsindex erhöht werden, was zum Beispiel durch Verwendung der weiteren gemessenen Intensitäten zur Fehlerkorrektur erfolgen kann.

Die Erfindung wird im folgenden anhand eines Ausführungsbeispiels unter Bezugnahme auf die Zeichnungen näher erläutert, in denen

Figur 1     schematisch den Aufbau einer erfindungsgemäßen Vorrichtung zur Bestimmung des Brechungsindex eines Fluids zeigt, und

Figur 2     schematisch den Aufbau einer weiteren Ausführungsform einer erfindungsgemäßen Vorrichtung zur Bestimmung des Brechungsindex eines Fluids zeugt.

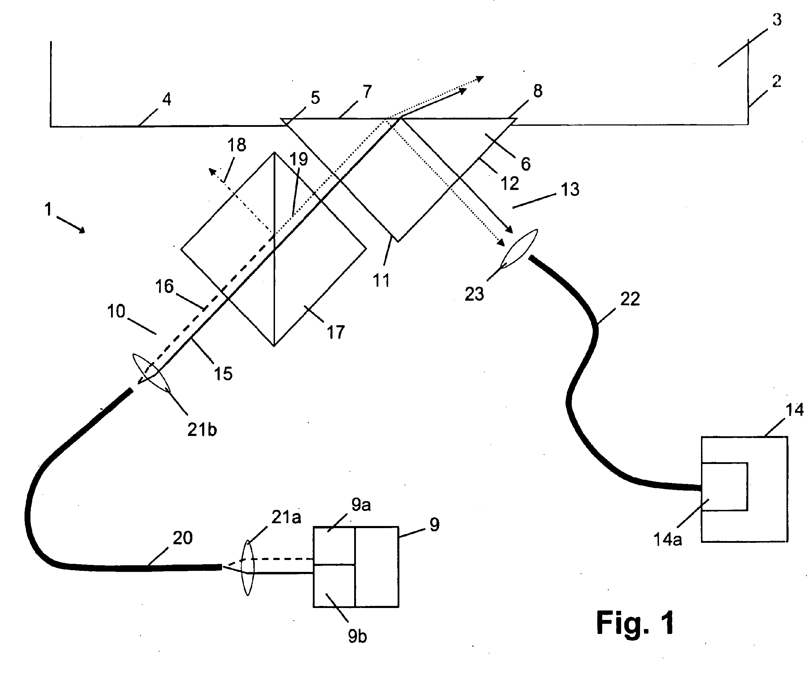

Die in Figur 1 gezeigte Vorrichtung 1 ist an einem teilweise dargestellten Behälter 2 angeordnet, der das zu untersuchende Fluid 3 enthält. Der Behälter 2 kann beispielsweise ein Behälter einer industriellen Produktionsanlage, ein Reaktor oder Mischbehälter einer chemischen Anlage oder ein Tank zur Speicherung eines Fluids sein. In einer besonders bevorzugten Ausführungsform ist der Behälter 2 der Kerosintank eines Flugzeugs, und das Fluid 3 ist Kerosin. In dem Boden 4 des Behälters 2 ist eine Öffnung 5 ausgebildet. Die Vorrichtung 1 weist ein Prisma 6 auf, das derart in der Öffnung 5 angeordnet ist; daß es nach außen aus der Öffnung 5 vorsteht und die Öffnung 5 im wesentlichen durch eine ebene Außenfläche 7 des Prismas 6 verschlossen ist. Zwischen dem Prisma 6 und dem Boden 4 des Behälters 2 ist eine Dichtung (nicht gezeigt) vorgesehen, so daß das Fluid 3 nicht aus dem Behälter 2 entweichen kann. Auf diese Weise wird an der Außenfläche 7 des Prismas 6 eine Grenzfläche 8 zu einem in dem Behälter 2 befindlichen Fluid 3 gebildet. In dem dargestellten Beispiel ist die Vorrichtung 1 vorgesehen, um an einem mit einer Öffnung versehenen Behälter angeordnet zu werden, der z.B. zu einem Kerosintank eines Flugzeugs oder dergleichen gehört und in dem sich ein zu überwachender Treibstoff befindet. Der Behälter 2 kann aber auch ein integraler Bestandteil der Vorrichtung 1 sein, d.h. ein Behälter, in den eine zu untersuchende Flüssigkeit für die Messung eingefüllt wird.

Die Vorrichtung 1 enthält ferner eine Lichtquelle 9, die einen Lichtstrahl 10 abstrahlt, der entlang eines festen Lichtweges senkrecht durch eine Eintrittsfläche 11 des Prismas 6 in dieses eintritt, das Prisma 6 in Richtung auf die Grenzfläche 8 durchläuft, an dieser teilweise reflektiert wird (ein weiterer Teil wird gebrochen und tritt in das Fluid 3 ein), das Prisma 6 in Richtung auf eine Austrittsfläche 12 durchläuft und senkrecht durch diese aus dem Prisma 6 austritt. In dem Lichtweg des reflektierten Lichtstrahls 13 ist als Teil einer Detektoranordnung 14 ein Detektor 14a in Form von z.B. einer Photodiode angeordnet. Die Lichtquelle 9 strahlt unpolarisiertes Licht ab, das zwischen zwei unterschiedlichen Wellenlängen umgeschaltet werden kann. Dazu kann die Lichtquelle 9 beispielsweise zwei unterschiedliche LEDs 9a und 9b aufweisen. In Figur 1 ist der der ersten Wellenlänge entsprechende "Teilstrahl" mit dem Bezugszeichen 15 und durch eine durchgezogenen Linie angedeutet, während der der zweiten Wellenlänge entsprechende "Teilstrahl" mit dem Bezugszeichen 16 und durch eine gestrichelte Linie angedeutet ist. Zur Veranschaulichung sind die beiden Teilstrahlen in Figur 1 räumlich getrennt dargestellt. Es ist jedoch darauf hinzuweisen, daß die Lichtquelle 9 unabhängig von der Wellenlänge einen Lichtstrahl 10 aussendet, für den der Lichtweg zwischen Lichtquelle 9 und Detektor 14 für beide Wellenlängen derselbe ist.

Zwischen der Lichtquelle 9 und der Eintrittsfläche 11 des Prismas 6 ist ein Polarisationsstrahlteiler 17 angeordnet. Dieser ist so gewählt, daß er auf das Licht 15 mit der ersten Wellenlänge keinen oder nur einen geringen polarisierenden Einfluß von z.B. weniger als 10% ausübt. Dagegen läßt er bei dem Licht 16 mit der zweiten Wellenlänge nur oder überwiegend nur (z.B. mehr als 90%) eine bestimmte Polarisationskomponente 19 durch, während die zu dieser senkrechte Polarisationskomponente 18 im wesentlichen reflektiert und aus dem Lichtweg entfernt wird. Somit wirkt der Polarisationsstrahlteiler (im wesentlichen) nur für Licht 16 mit der zweiten Wellenlänge als Polarisator. Der Übergang von unpolarisiertem Licht zu polarisiertem Licht ist in Figur 1 dadurch angedeutet, daß das in den Polarisationsstrahlteiler 17 eintretende Licht 16 mit der zweiten Wellenlänge durch eine gestrichelte Linie gekennzeichnet ist, während das aus dem Lichtweg reflektierte Licht 18 bzw. das durchgelassene Licht 19 mit der zweiten Wellenlänge durch eine strichpunktierte bzw. eine punktierte Linie gekennzeichnet ist.

Auf diese Weise wird erreicht, daß unpolarisiertes Licht 15 mit der ersten Wellenlänge und linear polarisiertes Licht 19 mit der zweiten Wellenlänge auf die Grenzfläche 8 auftrifft und von dieser reflektiert wird. Somit ist das Reflexionsvermögen der Grenzfläche 8 für die beiden Teilstrahlen 15 und 18 unterschiedlich.

Die Lichtquelle 9 enthält eine Steuereinrichtung, die während einer Messung die Lichtquelle 9 zunächst so steuert, daß sie monochromatisches Licht mit der ersten Wellenlänge aussendet, und die Lichtquelle 9 anschließend so steuert, daß sie monochromatisches Licht mit der zweiten Wellenlänge aussendet. Die Photodiode 14a erzeugt ein elektrisches Signal, das für die Intensität des Lichtes charakteristisch ist. Somit erzeugt sie während des Zeitraums, in dem die Lichtquelle 9 monochromatisches Licht mit der ersten Wellenlänge aussendet, ein Signal, das für die reflektierte Intensität bei der ersten Wellenlänge charakteristisch ist, und während des Zeitraums, in dem die Lichtquelle 9 monochromatisches Licht mit der zweiten Wellenlänge aussendet, ein Signal, das für die reflektierte Intensität bei der zweiten Wellenlänge charakteristisch ist. Diese beiden zeitlich getrennten Signale werden an eine mit der Detektoranordnung 14 verbundene Auswerteeinheit (nicht gezeigt) geleitet und dort unter Berücksichtigung der vorab durch Referenzmessungen bestimmten Systemparameter ausgewertet, um den Brechungsindex des Fluids 3 zu berechnen.

Die beiden Wellenlängen sind zum einen so gewählt, daß der Polarisationsstrahlteiler für die zweite Wellenlänge polarisierend wirkt und für die erste nicht. So ist beispielsweise ein Polarisationsstrahlteiler verfügbar, der bei 650 nm linear polarisierend wirkt, bei 550 nm jedoch keine bzw. nur eine geringe lineare Polarisation bewirkt. Ferner sollten die beiden Wellenlängen so dicht beieinander liegen, daß entweder der durch die Wellenlängenabhängigkeit der Brechungsindizes des Prismenglases und des Fluids verursachte Fehler bei der Bestimmung des Brechungsindex des Fluids vernachlässigt werden kann, oder daß der Einfluß dieser Wellenlängenabhängigkeit rechnerisch in geeigneter Weise berücksichtigt werden kann.

Entlang eines Teils des Weges zwischen der Lichtquelle 9 und dem Polarisationsstrahlteiler 17 wird das Licht durch einen Lichtleiter 20 geleitet, der somit einen Teil des Lichtweges definiert. Zur Einkopplung des Lichtes in den Lichtleiter 20 ist eine Kollimationsoptik 21a vorgesehen, die den von der Lichtquelle 9 erzeugten Lichtstrahl 10 auf den Eingang des Lichtleiters 20 fokussiert, und zur Auskopplung des Lichtes aus dem Lichtleiter 20 ist eine weitere Kollimationsoptik 21b vorgesehen, die von dem aus dem Lichtleiter 20 austretenden Licht durchlaufen wird und aus diesem den auf den Polarisationsstrahlteiler 17 auftreffenden Lichtstrahl 10 erzeugt. In ähnlicher Weise ist zwischen dem Prisma 6 und der Detektoranordnung 14 ein weiterer Lichtleiter 22 vorgesehen, der das Licht zu dem Detektor 14a leitet, der unmittelbar benachbart zu dem Ausgang des Lichtleiters 22 angeordnet ist. Zur Einkopplung des Lichtes in den Lichtleiter 22 ist eine Kollimationsoptik 23 vorgesehen, die den aus dem Prisma 6 austretenden reflektierten Lichtstrahl 13 auf den Eingang des Lichtleiters 22 fokussiert. Durch die Lichtleiter 20 und 22 ist eine hohe. Flexibilität des Aufbaus möglich, und die Lichtquelle 9 sowie die Detektoranordnung 14 können entfernt von dem Polarisationsstrahlteiler 17 und dem Prisma 6 und damit von der durch die Grenzfläche 8 definierten Meßstelle angeordnet werden.

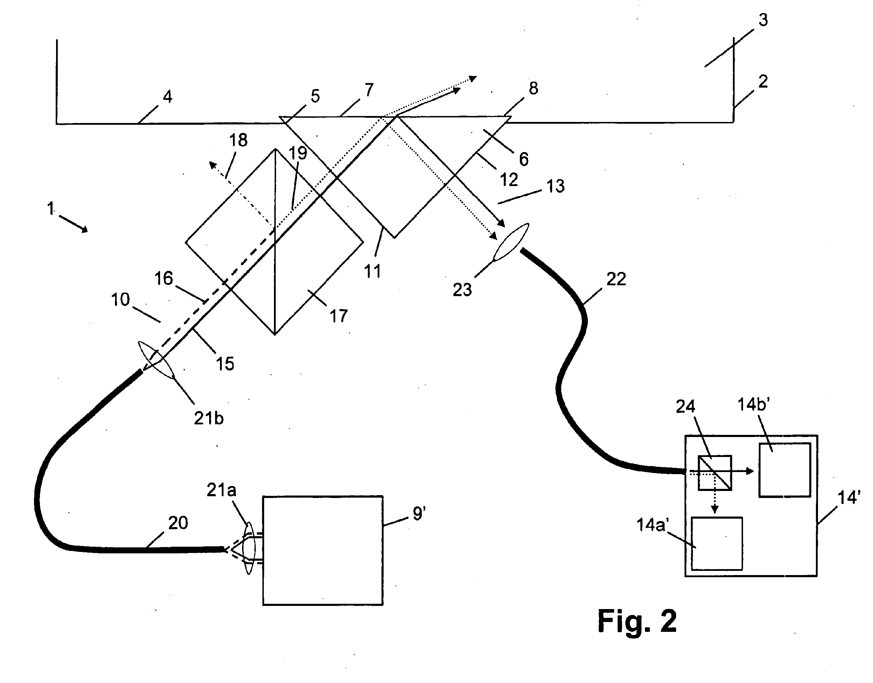

Figur 2 zeigt eine weitere Aufführungsform 1' einer erfindungsgemäßen Vorrichtung. In Figur 2 sind identische Komponenten mit identischen Bezugszeichen und modifizierte Komponenten durch Hinzüfügung eines Striches zu dem Bezugszeichen gekennzeichnet. Die in Figur 2 dargestellte Vorrichtung 1' unterscheidet sich von der Vorrichtung 1 lediglich dadurch, daß sie gegenüber der Vorrichtung 1 eine anders ausgestaltete Lichtquelle 9' und eine anders ausgestaltete Detektoranordnung 14' aufweist.

Die Lichtquelle 9' strahlt die beiden Wellenlängen 15 und 16 gleichzeitig ab, so daß der Lichtstrahl 10 gleichzeitig sowohl Licht der ersten Wellenlänge 15 als auch Licht der zweiten Wellenlänge 16 enthält. Um die reflektierten Intensitäten bei den beiden Wellenlängen getrennt messen zu können, enthält die Detektoranordnung 14' einen Strahlteiler 24, der das aus dem Lichtleiter 22 austretende Licht aufspaltet und zu einem ersten Detektor 14a' und einem zweiten Detektor 14b' leitet. Der erste Detektor 14a' enthält einen ersten Filter, der im wesentlichen nur Licht der ersten Wellenlänge durchläßt, und der zweite Detektor 14b' enthält einen zweiten Filter, der im wesentlichen nur Licht der zweiten Wellenlänge durchläßt. Auf diese Weise erzeugen die Detektoren 14a' und 14b' jeweils ein elektrisches Signal, das für die Intensität des Lichtes erster Wellenlänge bzw. des Lichtes zweiter Wellenlänge charakteristisch ist. Diese beiden gleichzeitig erzeugten Signale werden an eine mit der Detektoranordnung 14' verbundene Auswerteeinheit (nicht gezeigt) geleitet und dort unter Berücksichtigung der vorab durch Referenzmessungen bestimmten Systemparameter ausgewertet, um den Brechungsindex des Fluids 3 zu berechnen.

Anstatt die beiden Detektoren 14a', 14b' mit Filtern auszustatten, kann der Strahlteiler 24 auch als dichroitischer Strahlteiler oder als Dispersions-Gitter oder -Prisma ausgebildet sein. Die Lichtquelle 9' kann Licht aussenden, das nur monochromatisch die beiden Wellenlängen enthält, oder breitbandiges Licht aussenden, das neben den beiden Wellenlängen noch weitere Wellenlängen enthält.

**Patentansprüche**

1. Vorrichtung zur Bestimmung des Brechungsindex eines Fluids mit:

    - einem lichtdurchlässigen Körper (6), der eine Außenfläche (7) aufweist, die so mit einem Fluid (3) in Berührung gebracht werden kann, daß eine Grenzfläche (8) zwischen dem lichtdurchlässigen Körper (6) und dem Fluid (3) gebildet wird, **gekennzeichnet durch**

    - eine lichtemittierende Einrichtung (9, 9') zur Erzeugung eines Lichtstrahls (10), der entlang eines definierten Lichtweges verläuft, wobei die lichtemittierende Einrichtung (9, 9') so angeordnet ist, daß der Lichtstrahl (10) den lichtdurchlässigen Körper (6) durchläuft und unter einem vorbestimmten Winkel auf die Grenzfläche (8) auftrifft, und wobei die lichtemittierende Einrichtung (9, 9') zumindest Licht mit einer ersten vorbestimmten Wellenlänge (15) und einer zweiten vorbestimmten Wellenlänge (16) erzeugen kann,

    - eine Detektoranordnung (14, 14'), die so angeordnet ist, daß der von der Grenzfläche (8) reflektierte Lichtstrahl (13) auf die Detektoranordnung (14, 14') auftrifft, und die ein erstes Signal und ein zweites Signal erzeugt, die für die Intensität des reflektierten Lichtes (13) bei der ersten Wellenlänge bzw. bei der zweiten Wellenlänge charakteristisch sind, und

    - ein optisches Element (17), das in dem definierten Lichtweg zwischen der lichtemittierenden Einrichtung (9, 9') und der Detektoranordnung (14, 14') angeordnet ist und bei der ersten und der zweiten Wellenlänge unterschiedlich polarisierend wirkt.

2. Vorrichtung nach Anspruch 1, die ferner eine Auswerteeinheit enthält, die angepaßt ist, um das von der Detektoranordnung (14, 14') erzeugte erste Signal und das von der Detektoranordnung (14, 14') erzeugte zweite Signal zu empfangen und aus diesen ein für den Brechungsindex des Fluids (3) charakteristisches Signal zu erzeugen.

3. Vorrichtung nach einem der vorhergehenden Ansprüche, bei der die lichtemittierende Einrichtung (9) angepaßt ist, um Licht der ersten Wellenlänge und Licht der zweiten Wellenlänge zeitlich getrennt nacheinander abzustrahlen, und bei der die Detektoranordnung (14) einen Detektor (14a) zur Ermittlung der Intensität des auftreffenden Lichtes aufweist, der während der Abstrahlung von Licht der ersten Wellenlänge das erste Signal und während der Abstrahlung von Licht der zweiten Wellenlänge das zweite Signal erzeugt.

4. Vorrichtung nach Anspruch 1 oder Anspruch 2, bei der die lichtemittierende Einrichtung (9') angepaßt ist, um die erste und zweite Wellenlänge gleichzeitig abzustrahlen.

5. Vorrichtung nach Anspruch 4, bei der die Detektoranordnung einen Detektor aufweist, vor dem in dem Lichtweg ein Filter angeordnet ist, der wahlweise zwischen einem ersten Durchlaßbereich, der die erste Wellenlänge enthält und die zweite Wellenlänge nicht enthält, und einem zweiten Durchlaßbereich umgeschaltet werden kann, der die zweite Wellenlänge enthält und die erste Wellenlänge nicht enthält, so daß der Detektor während des Betriebes mit dem ersten Durchlaßbereich das erste Signal und während des Betriebes mit dem zweiten Durchlaßbereich das zweite Signal erzeugt.

6. Vorrichtung nach Anspruch 4, bei der die Detektoranordnung (14') einen ersten Detektor (14a') mit einem ersten Filter, der einen die erste Wellenlänge enthaltenden und die zweite Wellenlänge nicht enthaltenden ersten Durchlaßbereich aufweist, und einen zweiten Detektor (14b') mit einem zweiten Filter aufweist, der einen die zweite Wellenlänge enthaltenden und die erste Wellenlänge nicht enthaltenden zweiten Durchlaßbereich aufweist, so daß bei dem Auftreffen des reflektierten Lichtstrahls (13) auf die Detektoranordnung (14') der erste Detektor (14a') das erste Signal und der zweite Detektor (14b') das zweite Signal erzeugt.

7. Vorrichtung nach Anspruch 4, bei der die Detektoranordnung eine Einrichtung zur spektralen Analyse des auftreffenden Lichtes enthält, die zur Bestimmung der Intensität als Funktion der Wellenlänge angepaßt ist.

8. Vorrichtung nach einem der vorhergehenden Ansprüche, die ferner mindestens einen Lichtleiter (20, 22) enthält, der einen Teil des Lichtweges definiert und zwischen der lichtemittierenden Einrichtung (9, 9') und dem lichtdurchlässigen Körper (6) und/oder zwischen dem lichtdurchlässigen Körper (6) und der Detektoranordnung (14, 14') angeordnet ist.

9. Vorrichtung nach einem der vorhergehenden Ansprüche, bei der der lichtdurchlässige Körper (6) und das optische Element (17) durch dieselbe Komponente gebildet werden.

10. Verfahren zur Bestimmung des Brechungsindex eines Fluids mit den Schritten:

   - Anordnen eines Fluids (3) in der Weise, daß eine Grenzfläche (8) zwischen dem Fluid (3) und einem lichtdurchlässigen Körper (6) hergestellt wird, **gekennzeichnet durch**

   - Erzeugen eines Lichtstrahls (10), der so entlang eines definierten Lichtweges verläuft, daß er den lichtdurchlässigen Körper (6) durchquert und unter einem vorbestimmten Winkel auf die Grenzfläche (8) auftrifft, wobei beim Erzeugen des Lichtstrahls zumindest Licht mit einer ersten Wellenlänge und Licht mit einer zweiten Wellenlänge erzeugt wird,

   - unterschiedliches Polarisieren des Lichtes erster Wellenlänge und des Lichtes zweiter Wellenlänge vor dem Auftreffen auf die Grenzfläche (8) oder nach der Reflexion an der Grenzfläche (8),

   - Messen der Intensitäten des an der Grenzfläche (8) reflektierten Lichtes für die erste Wellenlänge und für die zweite Wellenlänge nach dem unterschiedlichen Polarisieren, und

   - Berechnung des Brechungsindex aus den gemessenen Intensitäten.

11. Verfahren nach Anspruch 10, bei dem aus dem berechneten Brechungsindex ferner die Zusammensetzung und/oder die Dichte des Fluids (3) berechnet wird.

12. Verfahren nach Anspruch 10 oder Anspruch 11, bei dem der Lichtstrahl (10) in der Weise erzeugt wird, daß er in einem ersten Zeitraum Licht der ersten Wellenlänge aber kein Licht der zweiten Wellenlänge enthält, und daß er in einem zweiten Zeitraum Licht der zweiten Wellenlänge aber kein Licht der ersten Wellenlänge enthält, und bei dem in dem ersten Zeitraum die Intensität des reflektierten Lichtes für die erste Wellenlänge und in dem zweiten Zeitraum die Intensität des reflektierten Lichtes für die zweite Wellenlänge gemessen wird.

13. Verfahren nach einem der Ansprüche 10 bis 12, bei dem der Lichtstrahl (10) in der Weise erzeugt wird, daß er gleichzeitig sowohl die erste als auch die zweite Wellenlänge enthält.

14. Verfahren nach Anspruch 13, bei dem die Intensität des an der Grenzfläche (8) reflektierten Lichtes (13) für die erste Wellenlänge gemessen wird, indem in einem ersten Zeitraum ein Filter in dem Lichtweg angeordnet wird, der einen Durchlaßbereich hat, der die erste Wellenlänge enthält und die zweite Wellenlänge nicht enthält, und bei dem die Intensität des an der Grenzfläche (8) reflektierten Lichtes (13) für die zweite Wellenlänge gemessen wird, indem in einem zweiten Zeitraum ein Filter in dem Lichtweg angeordnet wird, der einen Durchlaßbereich hat, der die zweite Wellenlänge enthält und die erste Wellenlänge nicht enthält.

**EP 1 929 279 B1**

**15.** Verfahren nach Anspruch 13, bei dem die Intensitäten des an der Grenzfläche (8) reflektierten Lichtes (13) für die erste und die zweite Wellenlänge gleichzeitig gemessen werden.

**Claims**

**1.** Apparatus for determining the refractive index of a fluid, comprising:

- a light-transmitting member (6) having an outer surface (7) which can be brought into contact with a fluid (3) in such a way that an interface (8) is formed between the light-transmitting member (6) and the fluid (3), **characterised by**
- a light-emitting device (9, 9') for generating a ray (10) of light which extends along a defined optical path, the light-emitting device (9, 9') being arranged in such a way that the ray (10) of light passes through the light-transmitting member (6) and impinges on the interface (8) at a predetermined angle, and the light-emitting device (9, 9') being able to generate at least light of a first predetermined wavelength (15) and a second predetermined wavelength (16),
- a detector arrangement (14, 14') which is arranged in such a way that the ray (13) of light reflected by the interface (8) impinges on the detector arrangement (14, 14') and which generates a first signal and a second signal characteristic of the intensity of the reflected light (13) at the first wavelength and the second wavelength, respectively, and
- an optical element (17) which is arranged in the defined optical path between the light-emitting device (9, 9') and the detector arrangement (14, 14') and polarises the first and second wavelengths differently.

**2.** Apparatus according to claim 1, further containing an evaluation unit which is adapted to receive the first signal generated by the detector arrangement (14, 14') and the second signal generated by the detector arrangement (14, 14') and to generate a signal characteristic of the refractive index of the fluid (3) therefrom.

**3.** Apparatus according to any one of the preceding claims, in which the light-emitting device (9) is adapted to emit light of the first wavelength and light of the second wavelength successively at different times, and in which the detector arrangement (14) has a detector (14a) for identifying the intensity of the incident light which generates the first signal when light of the first wavelength is emitted and generates the second signal when light of the second wavelength is emitted.

**4.** Apparatus according to either claim 1 or claim 2, in which the light-emitting device (9') is adapted to emit the first and second wavelengths simultaneously.

**5.** Apparatus according to claim 4, in which the detector arrangement has a detector, in front of which in the optical path a filter is arranged which can selectively be switched between a first pass band containing the first wavelength and not the second wavelength and a second pass band containing the second wavelength and not the first wavelength in such a way that the detector generates the first signal during operation with the first pass band and generates the second signal during operation with the second pass band.

**6.** Apparatus according to claim 4, in which the detector arrangement (14') has a first detector (14a') comprising a first filter which has a first pass band containing the first wavelength and not the second wavelength, and a second detector (14b') comprising a second filter which has a second pass band containing the second wavelength and not the first wavelength in such a way that the first detector (14a') generates the first signal and the second detector (14b') generates the second signal when the reflected ray (13) of light impinges on the detector arrangement (14').

**7.** Apparatus according to claim 4, in which the detector arrangement contains a means for the spectral analysis of incident light which is adapted to determine intensity as a function of wavelength.

**8.** Apparatus according to any one of the preceding claims, further containing at least one light guide (20, 22) which defines a portion of the optical path and is arranged between the light-emitting device (9, 9') and the light-transmitting member (6) and/or between the light-transmitting member (6) and the detector arrangement (14, 14').

**9.** Apparatus according to any one of the preceding claims, in which the light-transmitting member (6) and the optical element (17) are formed by the same component.

**10.** Method of determining the refractive index of a fluid, comprising the steps:

- arranging a fluid (3) in such a way that an interface (8) is formed between the fluid (3) and a light-transmitting member (6), **characterised by**
- generating a ray (10) of light which extends along a defined optical path in such a way that it passes through the light-transmitting member (6) and impinges on the interface (8) at a pre-

**12**

determined angle, at least light of a first wavelength and light of a second wavelength being generated when the ray of light is generated,
- polarising the light of the first wavelength and the light of the second wavelength differently before they impinge on the interface (8) or after they are reflected at the interface (8),
- measuring the intensity of the light reflected at the interface (8) for the first wavelength and the second wavelength after it has been polarised differently, and
- calculating the refractive index from the intensity measured.

11. Method according to claim 10, in which the composition and/or the density of the fluid (3) is further calculated from the refractive index calculated.

12. Method according to either claim 10 or claim 11, in which the ray (10) of light is generated in such a way that it contains light of the first wavelength but no light of the second wavelength during a first time period, and that it contains light of the second wavelength but no light of the first wavelength in a second time period, and in which the intensity of the reflected light is measured for the first wavelength during the first time period and the intensity of the reflected light is measured for the second wavelength during the second time period.

13. Method according to any one of claims 10 to 12, in which the ray (10) of light is generated in such a way that it contains both the first and the second wavelengths simultaneously.

14. Method according to claim 13, in which the intensity of the light (13) reflected at the interface (8) is measured for the first wavelength by arranging a filter, which has a pass band containing the first wavelength and not the second wavelength, in the optical path during the first time period, and in which the intensity of the light (13) reflected at the interface (8) is measured for the second wavelength by arranging a filter, which has a pass band containing the second wavelength and not the first wavelength, in the optical path during the second time period.

15. Method according to claim 13, in which the intensity of the light (13) reflected at the interface (8) is measured for the first and second wavelengths simultaneously.

**Revendications**

1. Dispositif pour déterminer l'indice de réfraction d'un fluide, comprenant :

- un corps (6) perméable à la lumière, qui présente une surface extérieure (7) pouvant être amenée en contact avec un fluide (3), de manière à former une interface (8) entre le corps (6) perméable à la lumière et le fluide (3), **caractérisé par le fait qu'**il comporte
- un dispositif émetteur de lumière (9, 9'), destiné à produire un rayon lumineux (10) qui s'étend le long d'un chemin optique défini, le dispositif émetteur de lumière (9, 9') étant placé de manière telle que le rayon lumineux (10) traverse le corps (6) perméable à la lumière et arrive sous un angle prédéterminé sur l'interface (8), et le dispositif émetteur de lumière (9, 9') pouvant produire au moins une lumière ayant une première longueur d'onde (15) prédéterminée et une deuxième longueur d'onde (16) prédéterminée,
- un agencement de capteur (14, 14') qui est disposé de manière à ce que le rayon lumineux (13) réfléchi par l'interface (8) tombe sur l'agencement de capteur (14, 14') et qui produit un premier signal et un deuxième signal, qui sont caractéristiques de l'intensité de la lumière réfléchie (13) avec la première longueur d'onde et/ou avec la deuxième longueur d'onde, et
- un élément optique (17) qui est placé dans le chemin optique définie entre le dispositif émetteur de lumière (9, 9') et l'agencement de capteur (14, 14') et a des effets de polarisation différents pour la première et la deuxième longueur d'onde.

2. Dispositif selon la revendication 1, comprenant en outre une unité de traitement qui est adaptée pour recevoir le premier signal produit par l'agencement de capteur (14, 14') et le deuxième signal produit par l'agencement de capteur (14, 14') et pour générer à partir de ces signaux un signal caractéristique de l'indice de réfraction du fluide (3).

3. Dispositif selon une des revendications précédentes, dans lequel le dispositif émetteur de lumière (9, 9') est adapté pour émettre séparément dans le temps et successivement de la lumière avec la première longueur d'onde et de la lumière avec la deuxième longueur d'onde, et dans lequel l'agencement de capteur (14) présente un capteur (14a) pour déterminer l'intensité de la lumière incidente, qui produit le premier signal lors de l'émission de la lumière avec la première longueur d'onde et qui produit le deuxième signal lors de l'émission de la lumière avec la deuxième longueur d'onde.

4. Dispositif selon la revendication 1 ou 2, dans lequel le dispositif émetteur de lumière (9, 9') est adapté pour émettre simultanément la première et la deuxième longueur d'onde.

**5.** Dispositif selon la revendication 4, dans lequel l'agencement de capteur présente un capteur devant lequel se trouve un filtre qui est placé dans le trajet optique et peut être commuté au choix entre une première bande passante, contenant la première longueur d'onde et ne contenant pas la deuxième longueur d'onde, et une deuxième bande passante, contenant la deuxième longueur d'onde et ne contenant pas la première longueur d'onde, de sorte que le capteur produit le premier signal pendant le fonctionnement avec la première bande passante et le deuxième signal pendant le fonctionnement avec la deuxième bande passante.

**6.** Dispositif selon la revendication 4, dans lequel l'agencement de capteur (14') comprend un premier capteur (14a'), avec un premier filtre présentant une première bande passante, contenant la première longueur d'onde et ne contenant pas la deuxième longueur d'onde, et un deuxième capteur (14b'), avec un deuxième filtre présentant une deuxième bande passante, contenant la deuxième longueur d'onde et ne contenant pas la première longueur d'onde, de sorte que lors de l'incidence du rayon lumineux (13) réfléchi sur l'agencement de capteur (14'), le premier capteur (14a') produit le premier signal et le deuxième capteur (14b') produit le deuxième signal.

**7.** Dispositif selon la revendication 4, dans lequel l'agencement de capteur comporte un dispositif d'analyse spectrale de la lumière incidente, qui est adapté pour déterminer l'intensité en tant que fonction de la longueur d'onde.

**8.** Dispositif selon une dès revendications précédentes, comprenant en outre au moins un conducteur optique (20, 22) qui définit une partie du chemin optique et est placé entre le dispositif émetteur de lumière (9, 9') et le corps (6) perméable à la lumière et/ou entre le corps (6) perméable à la lumière et l'agencement de capteur (14, 14').

**9.** Dispositif selon une des revendications précédentes, dans lequel le corps (6) perméable à la lumière et l'élément optique (17) sont formés par le même composant.

**10.** Procédé pour déterminer l'indice de réfraction d'un fluide, comprenant les étapes suivantes:

- mise en place d'un fluide (3) de manière à établir une interface (8) entre le fluide (3) et un corps (6) perméable à la lumière, **caractérisé par le fait qu'**il prévoit
- la génération d'un rayon lumineux (10) qui s'étend le long d'un chemin optique défini de manière à traverser le corps (6) perméable à la lumière et à arriver sous un angle prédéterminé sur l'interface (8), la génération du rayon lumineux produisant au moins une lumière avec une première longueur d'onde et une lumière avec une deuxième longueur d'onde,
- des polarisations différentes de la lumière ayant la première longueur d'onde et de la lumière ayant la deuxième longueur d'onde, avant l'incidence sur l'interface ou après la réflexion sur l'interface (8),
- la mesure des intensités de la lumière réfléchie sur l'interface (8), pour la première longueur d'onde et pour la deuxième longueur d'onde, après les polarisations différentes, et
- le calcul de l'indice de réfraction à partir des intensités mesurées.

**11.** Procédé selon la revendication 10, selon lequel on calcule en outre la composition et/ou la densité du fluide (3) à partir de l'indice de réfraction calculé.

**12.** Procédé selon la revendication 10 ou 11, selon lequel le rayon lumineux (10) est produit de manière telle que, dans un premier intervalle de temps, il comporte la lumière avec la première longueur d'onde mais pas de lumière avec la deuxième longueur d'onde et que, dans un deuxième intervalle de temps, il comporte la lumière avec la deuxième longueur d'onde mais pas de lumière avec la première longueur d'onde, et selon lequel on mesure, dans le premier intervalle de temps, l'intensité de la lumière réfléchie pour la première longueur d'onde et, dans le deuxième intervalle de temps, l'intensité de la lumière réfléchie pour la deuxième longueur d'onde.

**13.** Procédé selon une des revendications 10 à 12, selon lequel le rayon lumineux (10) est produit de manière telle qu'il comporte en même temps aussi bien la première que la deuxième longueur d'onde.

**14.** Procédé selon la revendication 13, selon lequel l'intensité de la lumière (13) réfléchie sur l'interface (8) est mesurée pour la première longueur d'onde par le fait que, dans un premier intervalle de temps, on place dans le chemin optique un filtre ayant une bande passante qui contient la première longueur d'onde et ne contient pas la deuxième longueur d'onde, et selon lequel l'intensité de la lumière (13) réfléchie sur l'interface (8) est mesurée pour la deuxième longueur d'onde par le fait que, dans un deuxième intervalle de temps, on place dans le chemin optique un filtre ayant une bande passante qui contient la deuxième longueur d'onde et ne contient pas la première longueur d'onde.

**15.** Procédé selon la revendication 13, selon lequel les intensités de la lumière (13) réfléchie sur l'interface (8) sont mesurées simultanément pour la première

**EP 1 929 279 B1**

et la deuxième longueur d'onde.

**Fig. 1**

**Fig. 2**

EP 1 929 279 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5572314 A
- DE 19805853 A1
- EP 116746 A
- DE 19856591 A1